# EUROPEAN PATENT APPLICATION

(11) **EP 3 605 941 A1**
(43) Date of publication of application: **05.02.2020**
(21) Application number: 17901369.3
(22) Date of filing: 10.11.2017
(51) Int. Cl.: H04L 9/08, H04N 21/266, H04N 21/6375, H04L 29/06

(54) **TRANSMISSION SYSTEM, COMMUNICATION TERMINAL DEVICE, AND TRANSMISSION METHOD**

(30) Priority: 24.03.2017 JP 2017059616
(71) Applicant: NEC Corporation, Tokyo 108-8001 (JP); Tokyo FM Broadcasting Co., Ltd., Tokyo 102-8080 (JP); Tokyo Smartcast Inc., Tokyo 102-8080 (JP)
(72) Inventor: TABUCHI Yoji, Tokyo 108-8001 (JP); YAGI Manabu, Tokyo 108-8001 (JP); TAIRA Kazuhiko, Tokyo 102-8080 (JP); TAKEUCHI Hideto, Tokyo 102-8080 (JP)
(74) Representative: Betten & Resch
(86) International application number: PCT/JP2017/040580
(87) International publication number: WO 2018/173358

(57) **Abstract**

A transmission system transmits content using a bidirectional communication means and a unidirectional communication means. The transmission system includes: an encryption unit that encrypts the content; a first transmission unit that transmits the encrypted content or an encryption key used in the encryption, using the unidirectional communication means; and a second transmission unit that transmits, among the encrypted content and the encryption key used in the encryption, data other than the data transmitted by the first transmission unit, using the bidirectional communication means. The first transmission unit retransmits, using the unidirectional communication means, the data transmitted the previous time, in response to a retransmission request via the bidirectional communication means.

## Description

### TECHNICAL FIELD

The present invention relates to a transmission system, a communication terminal device, and a transmission method.

### BACKGROUND ART

In content transmission by a V-Low broadcast wave, content transmission in a file format is possible in addition to video and audio stream transmission. Content transmission by a broadcast wave including a V-Low broadcast wave allows simultaneous transmissions to be performed by a broadcast. However, because the transmissions are performed by radio waves, the communication quality largely depends on the environment of the propagation path. Furthermore, in contrast to stream transmissions where a decrease in the communication quality causes at most a temporary disturbance or interruption in the video and audio, in the case of content transmissions in a file format the likelihood that the content will be unusable on the receiving side is high as long as the integrity of all of the transmitted data is not guaranteed. Moreover, since a broadcast wave is a unidirectional communication, arrival confirmation cannot be performed in the manner of a typical two-way communication such as TCP/IP.

Therefore, in current data transmission methods using a broadcast wave, the integrity of the data is ensured by repeatedly transmitting the target data and appropriately completing the missing data on the receiving side. However, when transmitting a large volume of data or when there is a restriction on the data transmission time, there is a possibility that not all data can be received.

As a related technique, for example, Patent Document 1 describes a control method for retransmitting encrypted content and an encryption key thereof via a mobile network when data loss occurs in a content transmission system using a broadcast wave. Furthermore, Patent Document 2 describes a control method for determining parameters such as the frequency of a broadcast wave according to the reception status of the receiving terminal and the state of the receiving terminal when transmitting content by a broadcast wave.

### [Prior Art Documents]

### [Patent Documents]

[Patent Document 1] PCT International Publication No. WO 2011/052223
[Patent Document 2] Japanese Unexamined Patent Application, First Publication No. 2010-74360

### SUMMARY OF THE INVENTION

### Problem to be Solved by the Invention

However, according to the method of Patent Document 1, because the encrypted content and the encryption key thereof are both transmitted by a mobile network, the confidentiality of the transmitted content cannot be maintained if communications on the mobile network are intercepted. Furthermore, Patent Document 2 does not disclose a technique related to ensuring the confidentiality of content transmission.

Therefore, the present invention has an object of providing a transmission system, a communication terminal device, and a transmission method that solve the problems described above.

### Means for Solving the Problem

A transmission system according to an exemplary aspect of the present invention is a transmission system that transmits content using a bidirectional communication means and a unidirectional communication means, the transmission system including: an encryption unit that encrypts the content; a first transmission unit that transmits the encrypted content or an encryption key used in the encryption, using the unidirectional communication means; and a second transmission unit that transmits, among the encrypted content and the encryption key used in the encryption, data other than the data transmitted by the first transmission unit, using the bidirectional communication means. The first transmission unit retransmits, using the unidirectional communication means, the data transmitted the previous time, in response to a retransmission request via the bidirectional communication means.

Furthermore, a communication terminal device according to an exemplary aspect of the present invention is a communication terminal device that receives the encrypted content and the encryption key from the above transmission system, and makes a retransmission request using the bidirectional communication means when decryption of the content fails using the encryption key.

A transmission system according to an exemplary aspect of the present invention is a transmission system that transmits content using a bidirectional communication means and a unidirectional communication means, the transmission system including: a first transmission unit that transmits one divided part of the content using the unidirectional communication means; and a second transmission unit that transmits the other divided part of the content using the bidirectional communication means. The first transmission unit retransmits, using the unidirectional communication means, the data transmitted the previous time, in response to a retransmission request via the bidirectional communication means.

A transmission method according to an exemplary aspect of the present invention is a transmission method performed by a transmission system that transmits content using a bidirectional communication means and a unidirectional communication means, the transmission method including: encrypting the content; transmitting the encrypted content or an encryption key used in the encryption, using the unidirectional communication means; transmitting, among the encrypted content and the encryption key used in the encryption, data other than the data transmitted using the unidirectional communication means, using the bidirectional communication means; and retransmitting, using the unidirectional communication means, the data transmitted the previous time, in response to a retransmission request via the bidirectional communication means.

Furthermore, a transmission method according to an exemplary aspect of the present invention is a transmission method performed by a transmission system that transmits content using a bidirectional communication means and a unidirectional communication means, the transmission method including: transmitting one divided part of the content using the unidirectional communication means; transmitting the other divided part of the content using the bidirectional communication means; and retransmitting, using the unidirectional communication means, the data transmitted the previous time, in response to a retransmission request via the bidirectional communication means.

### Effect of the Invention

According to an exemplary embodiment of the present invention, it is possible to improve the confidentiality of content transmission with respect to a data transmission by a broadcast wave and a mobile network.

### BRIEF DESCRIPTION OF THE DRAWINGS

FIG. 1 is a block diagram showing a minimum configuration of a transmission system according to a first exemplary embodiment of the present invention.
FIG. 2 is a block diagram showing an example of a transmission/reception system according to the first exemplary embodiment of the present invention.
FIG. 3 is a diagram showing a configuration example of the transmission/reception system according to the first exemplary embodiment of the present invention.
FIG. 4A is a first section of a first diagram that describes a data transmission/reception method according to the first exemplary embodiment of the present invention.
FIG. 4B is a second section of the first diagram that describes the data transmission/reception method according to the first exemplary embodiment of the present invention.
FIG. 5 is a flowchart showing an example of data transmission/reception processing according to the first exemplary embodiment of the present invention.
FIG. 6A is a first section of a second diagram that describes the data transmission/reception method according to the first exemplary embodiment of the present invention.
FIG. 6B is a second section of the second diagram that describes the data transmission/reception method according to the first exemplary embodiment of the present invention.
FIG. 7 is a block diagram showing an example of a transmission/reception system according to a second exemplary embodiment of the present invention.
FIG. 8 is a first flowchart showing an example of data transmission/reception processing according to the second exemplary embodiment of the present invention.
FIG. 9 is a second flowchart showing an example of data transmission/reception processing according to the second exemplary embodiment of the present invention.

### EMBODIMENTS FOR CARRYING OUT THE INVENTION

### <First Exemplary Embodiment>

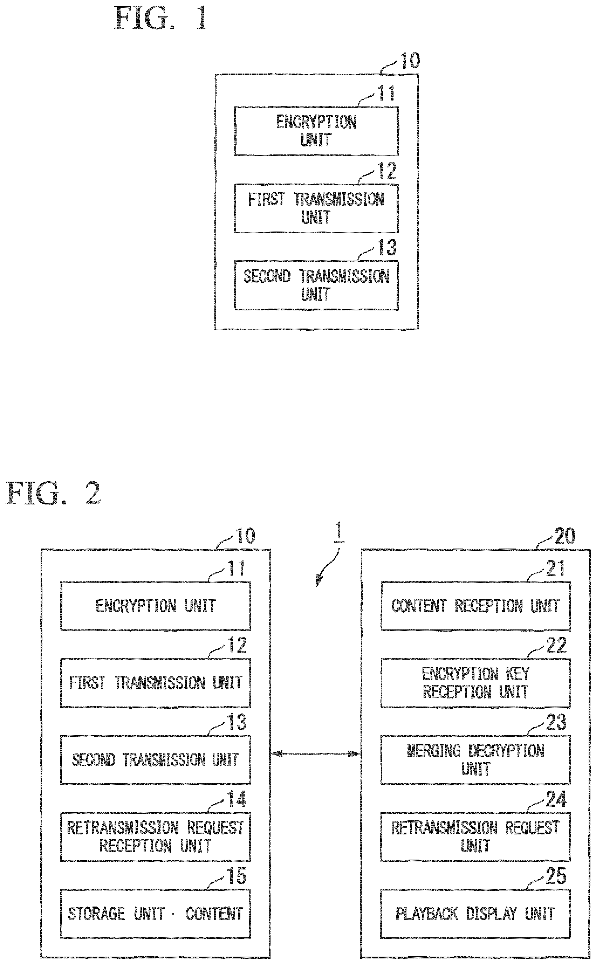

Hereunder, a transmission/reception system according to an exemplary embodiment of the present invention will be described with reference to FIG. 1 to FIG. 6B.

FIG. 1 is a diagram showing a minimum configuration of a transmission system according to a first exemplary embodiment.

As shown in FIG. 1, the transmission system 10 includes at least an encryption unit 11, a first transmission unit 12, and a second transmission unit 13.

The transmission system 10 is a system that transmits content using a bidirectional communication means and a unidirectional communication means. The encryption unit 11 encrypts content. The first transmission unit 12 transmits, using one communication means among the bidirectional communication means and the unidirectional communication means, at least one among a part or all of the encrypted content and an encryption key used in the encryption. The second transmission unit 13 transmits, among the encrypted content and the encryption key used in the encryption, data other than the data transmitted by the first transmission unit 12 via a different communication means to the communication means used by the first transmission unit 12. Furthermore, at least one among the first transmission unit 12 and the second transmission unit 13 retransmits, in response to a retransmission request by the bidirectional communication means, the data transmitted the previous time using the same communication means as the previous transmission.

FIG. 2 is a block diagram showing an example of a transmission/reception system according to the first exemplary embodiment of the present invention.

The transmission/reception system 1 is configured by including the transmission system 10 and a communication terminal device 20. The transmission system 10 and the communication terminal device 20 are communicably connected via the bidirectional communication means. The bidirectional communication means is, for example, a mobile network such as LTE or 3G, or an internet network. Furthermore, the transmission system 10 transmits data via the unidirectional communication means, and the communication terminal device 20 receives the data. The unidirectional communication means is, for example, a broadcast wave such as a V-Low broadcast wave, a radio broadcast wave, or a digital television broadcast wave.

The transmission system 10 is provided at a broadcast station, and performs simultaneous distribution of content by a V-Low broadcast wave or the like. Furthermore, the transmission system 10 is capable of performing data transmission/reception through a mobile network. The communication terminal device 20 is, for example, a mobile terminal or a dedicated terminal capable of receiving and performing playback of a V-Low broadcast wave. The communication terminal device 20 includes; a communication function that transmits and receives data via a mobile network or an internet network, an antenna that receives encrypted content from a broadcast wave, a tuner that demodulates the encrypted content, and software that decrypts the encrypted content.

As illustrated, the transmission system 10 includes; the encryption unit 11, the first transmission unit 12, the second transmission unit 13, a retransmission request reception unit 14, and a storage unit 15.

The encryption unit 11 encrypts content using an authenticated encryption technique (AE: Authenticated Encryption). As is known, data encrypted by an authenticated encryption technique has guaranteed confidentiality and integrity. That is to say, in addition to confidentiality of the data due to encryption, data tampering can be detected.

The first transmission unit 12 uses either communication means among a mobile network (or internet network) and a broadcast wave to transmit the content encrypted by the encryption unit 11 (hereinafter referred to as encrypted content) or an encryption key that decrypts the encrypted data. Content refers to digital data including video data, audio data, text data, image data, device firmware, control data, and the like.

The second transmission unit 13 uses the communication means among a mobile network (or internet network) and a broadcast wave not used by the first transmission unit 12 to transmit, among the encrypted content and the encryption key, data not transmitted by the first transmission unit 12.

The retransmission request reception unit 14 receives from the communication terminal device 20, a retransmission request signal for at least one among the encrypted content and the encryption key.

The storage unit 15 is a storage device that stores content.

As shown in the diagram, the communication terminal device 20 includes; a content reception unit 21, an encryption key reception unit 22, a merging decryption unit 23, a retransmission request unit 24, and a playback display unit 25.

The content reception unit 21 receives encrypted content via a mobile network (or internet network) or a broadcast wave.

The encryption key reception unit 22 receives an encryption key via a mobile network (or internet network) or a broadcast wave.

The merging decryption unit 23 uses the encryption key received by the encryption key reception unit 22 to decrypt the encrypted content acquired by the content reception unit 21. Furthermore, the merging decryption unit 23 determines whether decryption has succeeded or failed. Moreover, if the encrypted content is divided and then transmitted, the merging decryption unit 23 merges the divided encrypted content after decryption, provided that the encrypted content was encrypted after being divided. In addition, if the encrypted content was divided after being encrypted, the merging decryption unit 23 performs decryption after merging the divided encrypted content.

If decryption by the merging decryption unit 23 fails, the retransmission request unit 24 transmits a retransmission request signal for at least one among the encrypted content and the encryption key to the transmission system 10 via a mobile network (or internet network), which is a bidirectional communication means.

The playback display unit 25 performs playback and displays content after being decrypted by the merging decryption unit 23. The playback display unit 25, for example, performs playback of video data and audio data, and displays text data and image data.

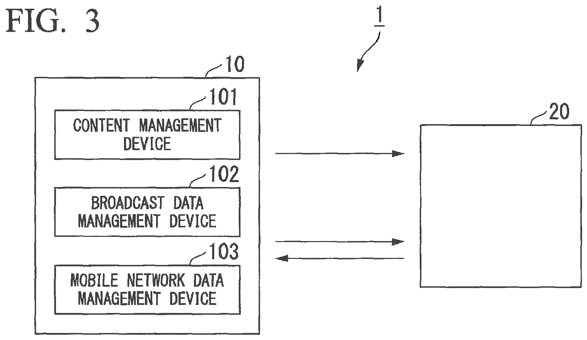

FIG. 3 is a diagram showing a configuration example of the transmission/reception system according to the first exemplary embodiment of the present invention.

A configuration example of the transmission/reception system 1 of the present exemplary embodiment is shown in FIG. 3.

The transmission system 10 includes a content management device 101, a broadcast data management device 102, and a mobile network data management device 103. Encrypted content and an encryption key generated by the content management device 101 are transmitted to the communication terminal device 20 via both the broadcast data management device 102 and the mobile network data management device 103. Thereafter, the content can be used on the communication terminal device 20 side by using the encryption key to decrypt the encrypted content on the communication terminal device 20 side.

In FIG. 3, the content management device 101 retains (storage unit 15) plain text data of the content to be transmitted to the communication terminal device 20, and has a function (encryption unit 11) that encrypts the content by an authenticated encryption technique using an arbitrary encryption key. Furthermore, the content management device 101 transmits the encrypted content (or the encryption key) to the broadcast data management device 102, and transmits the encryption key (the encrypted content if the encryption key was transmitted to the broadcast data management device 102) to the mobile network data management device 103. The content management device 101 instructs the broadcast data management device 102 to transmit the encrypted content (the encryption key if the encryption key was transmitted to the broadcast data management device 102). The content management device 101 instructs the mobile network data management device 103 to transmit the encryption key (the encrypted content if the encrypted content was transmitted to the mobile network data management device 103). Furthermore, the content management device 101 has a function (retransmission request reception unit 14) that accepts a retransmission request for the encrypted content from the mobile network data management device 103, and instructs the broadcast data management device 102 (the mobile network data management device 103 if the encrypted content was transmitted to the mobile network data management device 103) to retransmit the encrypted content. Alternatively, the content management device 101 (retransmission request reception unit 14) accepts a retransmission request for the encryption key from the mobile network data management device 103, and instructs the mobile network data management device 103 (the broadcast data management device 102 if the encryption key was transmitted to the broadcast data management device 102) to retransmit the encryption key.

The broadcast data management device 102 has a function (first transmission unit 12) that performs transmission by a broadcast wave, according to an instruction from the content management device 101 to transmit the encrypted content (encryption key) received from the content management device 101.

The mobile network data management device 103 has a function (second transmission unit 13) that performs transmission via a mobile network according to an instruction from the content management device 101 to transmit the encryption key (encrypted content) received from the content management device 101. Furthermore, the mobile network data management device 103 has a function (retransmission request reception unit 14) that receives a retransmission request signal from the communication terminal device 20 and notifies the content management device 101.

The communication terminal device 20 has a function (content reception unit 21) that receives encrypted content via a broadcast wave (or mobile network), and a function (encryption key reception unit 22) that receives an encryption key via a mobile network (a broadcast wave if the encrypted content was received via a mobile network). The communication terminal device 20 additionally has a function (merging decryption unit 23) that decrypts the received encrypted content by an authenticated encryption technique using the encryption key, and a function (retransmission request unit 24) that detects data loss and tampering as a processing result at the time of decryption, and transmits a retransmission request signal for the encrypted content (or the encryption key) to the mobile network data management device 103 via a mobile network.

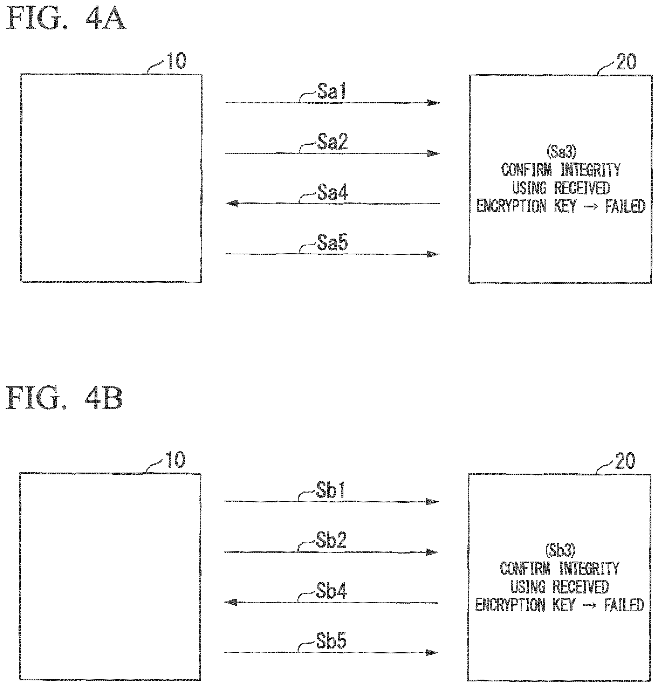

FIG. 4A and 4B are together a first diagram that describes a data transmission/reception method according to the first exemplary embodiment of the present invention.

An example of an operation in a case where encrypted content is transmitted by a broadcast wave and an encryption key is transmitted by a mobile network will be described with reference to FIG. 4A.
(Step Sa1): First, the broadcast data management device 102 transmits the encrypted content by a broadcast wave.
(Step Sa2): Then, the mobile network data management device 103 transmits the encryption key to the communication terminal device 20 via the mobile network.
(Step Sa3): The communication terminal device 20 decrypts the encrypted content using the encryption key, and confirms the integrity of the data. Here, it is assumed that the decryption has failed.
(Step Sa4): Then, the communication terminal device 20 transmits a retransmission request signal for the encrypted content via the mobile network. The mobile network data management device 103 receives the retransmission request signal, and transmits the signal to the content management device 101. The content management device 101, on the basis that the target of the retransmission request is the encrypted content, instructs the broadcast data management device 102, which transmitted the encrypted content the previous time, to retransmit the encrypted content.
(Step Sa5): The broadcast data management device 102 retransmits the encrypted content by a broadcast wave.

The transmission system 10 of the present exemplary embodiment is not limited to an aspect such as the example shown in FIG. 4A, where the encrypted content is transmitted by a broadcast wave and the encryption key is transmitted using a mobile network. Furthermore, the retransmission request may be a retransmission request for the encryption key. Next, an operation example in a case where an encryption key is transmitted by a broadcast wave and encrypted content is transmitted by a mobile network will be described with reference to FIG. 4B.
(Step Sb1): First, the mobile network data management device 103 transmits the encrypted content to the communication terminal device 20 via the mobile network.
(Step Sb2): Then, the broadcast data management device 102 transmits the encryption key by a broadcast wave.
(Step Sb3): The communication terminal device 20 decrypts the encrypted content using the encryption key, and confirms the integrity of the data. Here, it is assumed that the decryption has failed.
(Step Sb4): Then, the communication terminal device 20 transmits a retransmission request signal for the encryption key via the mobile network. The mobile network data management device 103 receives the retransmission request signal, and transmits the signal to the content management device 101. The content management device 101, on the basis that the target of the retransmission request is the encryption key, instructs the broadcast data management device 102, which transmitted the encryption key the previous time, to retransmit the encryption key.
(Step Sb5): The broadcast data management device 102 retransmits the encryption key by a broadcast wave.

Furthermore, in FIG. 4A and 4B, an example of an operation that makes a retransmission request for either the encrypted content or the encryption key was presented. However, the communication terminal device 20 may make a retransmission request for both the encrypted content and the encryption key. Furthermore, the mobile network data management device 103 may use an internet network instead of a mobile network to transmit the encryption key or the encrypted content, and receive the retransmission request signal from the communication terminal device 20.

Next, a processing sequence for transmission and retransmission of encrypted content and an encryption key will be described.

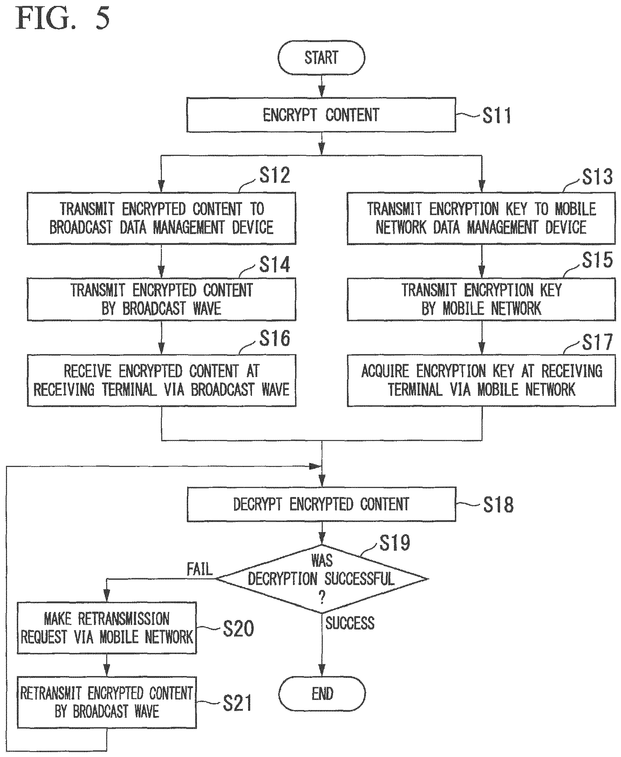

FIG. 5 is a flowchart showing an example of data transmission/reception processing according to the first exemplary embodiment of the present invention.

Similarly to FIG. 4A, the description assumes an example of a case where encrypted content is transmitted by a broadcast wave, and an encryption key is transmitted via a mobile network. Furthermore, it is assumed that the first transmission unit 12 is a function that performs transmission by a broadcast wave and the second transmission unit 13 is a function that performs transmission by a mobile network.

First, in the content management device 101, the encryption unit 11 uses an arbitrary encryption key to encrypt plain text content stored in the storage unit 15 by an authenticated encryption technique (step S11). Next, the content management device 101 transmits the encrypted content to the broadcast data management device 102 (step S12). Then, in the broadcast data management device 102, the first transmission unit 12 transmits the encrypted content by a broadcast wave when, for example, a predetermined time arrives (step S14). Next, in the communication terminal device 20, the content reception unit 21 receives the encrypted content transmitted by the broadcast wave (step S16).

Concurrently with the processing of step S12, step S14, and step S16, the content management device 101 transmits the encryption key to the mobile network data management device 103 (step S13). Then, in the mobile network data management device 103, the second transmission unit 13 transmits the encryption key via the mobile network (step S15). Next, in the communication terminal device 20, the encryption key reception unit 22 receives the encryption key transmitted using a communication network (step S17).

Next, the merging decryption unit 23 uses the encryption key received by the encryption key reception unit 22 to decrypt the encrypted content received by the content reception unit 21 (step S18). Here, when an authenticated encryption technique is used, confirmation of the integrity of the data is performed at the time of decryption. If data tampering or data loss exists, the decryption fails. The merging decryption unit 23 uses the nature of the authenticated encryption technique to confirm whether or not the integrity of the data is retained by determining whether the decryption was successful (step S19). If the decryption was successful (step S19: success), the processing flow ends. In this case, the user of the communication terminal device 20 is able to view and browse the decrypted content using the playback display unit 25.

If the decryption failed (step S19: fail), the retransmission request unit 24 transmits, on the basis that the decryption failed, a retransmission request signal for the encrypted content to the mobile network data management device 103 via the mobile network (step S20). The mobile network data management device 103 receives the retransmission request signal and outputs the signal to the content management device 101. In the content management device 101, the retransmission request reception unit 14 acquires the retransmission request signal for the encrypted content, and instructs the broadcast data management device 102, which transmitted the encrypted content the previous time, to retransmit the encrypted content. In the broadcast data management device 102, the first transmission unit 12 retransmits the encrypted content transmitted the previous time, by a broadcast wave (step S21). Further, the processing from step S18 is repeated until the decryption is successful, and content reception is completed when the decryption is finally successful.

When the retransmission request signal is received, the encryption unit 11 may re-encrypt the plain text content with a newly generated encryption key. In this case, in the processing of step S21, the first transmission unit 12 transmits the new encrypted content by a broadcast wave, and the second transmission unit 13 transmits the new encryption key using the mobile network.

Furthermore, although FIG. 5 is a flowchart based on the operation example of FIG. 4A, the processing sequence is the same in the case of the operation of FIG. 4B. Specifically, the encryption unit 11 first encrypts the content by an authenticated encryption technique (step S11), and transmits the encryption key to the broadcast data management device 102 and the encrypted content to the mobile network data management device 103 (equivalent to steps S12 and S13). Next, in processing equivalent to step S14, the second transmission unit 13 transmits the encrypted content by the mobile network when a predetermined time arrives. Furthermore, the first transmission unit 12 transmits the encryption key by a broadcast wave (equivalent to step S15). Next, in the communication terminal device 20, the content reception unit 21 receives the encrypted content transmitted by the mobile network (step S16). Further, the encryption key reception unit 22 receives the encryption key transmitted by the broadcast wave (step S17). Then, the merging decryption unit 23 decrypts the encrypted content (step S18). If the decryption failed (step S19: fail), the retransmission request unit 24 transmits a retransmission request signal for the encryption key to the mobile network data management device 103 via the mobile network (equivalent to step S20). On the other hand, the retransmission request reception unit 14 instructs the broadcast data management device 102, which transmitted the encryption key the previous time, to retransmit the encryption key. In the broadcast data management device 102, the first transmission unit 12 retransmits the encryption key transmitted the previous time, by a broadcast wave (step S21).

The encryption key itself is encrypted, and the key required to decrypt the encryption key is provided to the communication terminal device 20 in advance.

As described above, according to the present exemplary embodiment, in the transmission system 10 provided with a unidirectional communication means and a bidirectional communication means, the encrypted content and the encryption key are each transmitted using a separate communication means (communication path) whether being transmitted for the first time or being retransmitted. Consequently, the content cannot be reproduced even if the communication content transmitted by one of the communication means is intercepted. Therefore, confidentiality can be improved. Furthermore, by using an authenticated encryption technique, tampering and the like of the content is detected, and it is possible to confirm not only the confidentiality of the content but also the integrity of the data. Moreover, by including a bidirectional communication (mobile network or internet network) as one of the two communication means, the communication terminal device 20 is capable of making a retransmission request for the encrypted content or the encryption key when decryption fails. In addition, when there is a problem with the integrity of the data, the encrypted content can be received as many times as necessary by making retransmission requests until the content can be decrypted normally. As a result, the integrity of the data can be easily ensured. Further, retransmission requests are transmitted by the communication terminal device 20 only when there is a problem with the integrity of the data. Consequently, the frequency of retransmissions is held to a minimum, while the integrity of the received data can be ensured.

Depending on the characteristics of the broadcast wave and the mobile network, and the volume of the content data to be transmitted, the communication means used to transmit the encrypted content may be switched. For example, although the data transmission volume by a broadcast wave is smaller than the data transmission volume by a mobile network, communication charges are incurred for using a mobile network. Furthermore, although congestion of a mobile network can occur and cause a reduction in communication speed during times when there are many users and the like, there is no such concern for a broadcast wave. Therefore, for example, when the content is audio data, text data, or image data (still images) having a relatively small data volume, the encrypted content is transmitted by a broadcast wave. Further, when the content is video data having a large data volume, switching can be performed such that, for example, the encrypted content is transmitted by a mobile network while suppressing bandwidth consumption by billing the user and the like, and the encryption key is transmitted by a broadcast wave. Furthermore, according to the present exemplary embodiment, tampering can be prevented by an authenticated encryption technique. Therefore, the present exemplary embodiment is also suitable for the transmission of highly public content (such as disaster information), in which errors and tampering are not allowed, and which requires transmission to a large number of people. Moreover, if highly public content is to be transmitted, encrypted content having a relatively large data volume can be transmitted by a broadcast wave, which does not have concerns associated with congestion due to access concentration and the like.

### <Other Examples>

Examples have been described above where encrypted content is transmitted by one of the communication means, and an encryption key is transmitted by the other communication means. Next, another example will be described in which the content is divided, and the divided content is encrypted by an authenticated encryption technique and transmitted using two different communication means. Hereinafter, the description assumes that content A and content B, which are divided in advance, are stored in the storage unit 15.

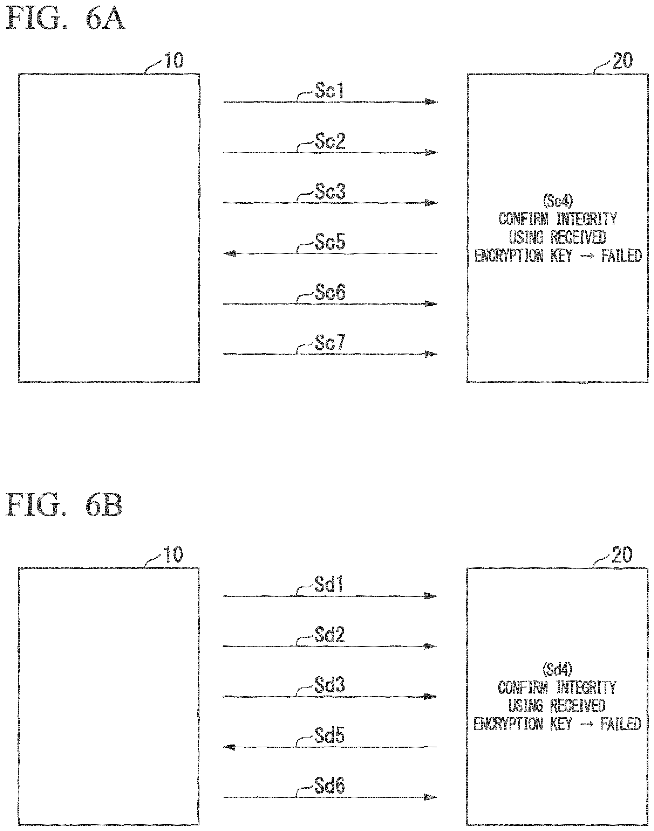

FIG. 6A and 6B are together a second diagram that describes a data transmission/reception method according to the first exemplary embodiment of the present invention.

An example of an operation in a case where divided encrypted content is transmitted by both a broadcast wave and a mobile network, and an encryption key is transmitted by a mobile network is described with reference to FIG. 6A.
(Step Sc1): First, the broadcast data management device 102 transmits the divided encrypted content A by a broadcast wave.
(Step Sc2): Then, the mobile network data management device 103 transmits the divided encrypted content B by the mobile network.
(Step Sc3): Next, the mobile network data management device 103 transmits the encryption key to the communication terminal device 20 via the mobile network.
(Step Sc4): The communication terminal device 20 decrypts the encrypted content A and the encrypted content B using the encryption key, and confirms the integrity of the data. Here, it is assumed that the decryption of at least one among the encrypted content A and the encrypted content B has failed.
(Step Sc5): Then, the communication terminal device 20 transmits a retransmission request signal for the encrypted content via the mobile network. The mobile network data management device 103 receives the retransmission request signal, and transmits the signal to the content management device 101. The content management device 101, on the basis that the target of the retransmission request is the encrypted content, instructs the broadcast data management device 102 and the mobile network data management device 103 to retransmit the same divided encrypted content as the previous time.
(Step Sc6): The broadcast data management device 102 retransmits the divided encrypted content A by a broadcast wave.
(Step Sc7): Finally, the mobile network data management device 103 transmits the divided encrypted content B. The communication terminal device 20 may transmit a retransmission request for only the content among the encrypted content A and the encrypted content B for which decryption has failed.

Next, an operation example in a case where an encryption key is transmitted by a broadcast wave, and retransmission of the encryption key is requested by a mobile network will be described with reference to FIG. 6B.
(Step Sd1): First, the broadcast data management device 102 transmits the divided encrypted content A by a broadcast wave.
(Step Sd2): Then, the mobile network data management device 103 transmits the divided encrypted content B by the mobile network.
(Step Sd3): Next, the broadcast data management device 102 transmits the encryption key to the communication terminal device 20 via a broadcast wave.
(Step Sd4): The communication terminal device 20 decrypts the encrypted content A and the encrypted content B using the encryption key, and confirms the integrity of the data. Here, it is assumed that the decryption of at least one among the encrypted content A and the encrypted content B has failed.
(Step Sd5): Then, the communication terminal device 20 transmits a retransmission request signal for the encryption key via the mobile network. The mobile network data management device 103 receives the retransmission request signal, and transmits the signal to the content management device 101. The content management device 101, on the basis that the target of the retransmission request is the encryption key, instructs the broadcast data management device 102, which transmitted the encryption key the previous time, to retransmit the encryption key.
(Step Sd6): The broadcast data management device 102 retransmits the encryption key by a broadcast wave. The communication terminal device 20 may transmit, in addition to a retransmission request signal for the encryption key, a retransmission request for only the content among the encrypted content A and the encrypted content B for which decryption has failed.

In such a transmission system having a plurality of communication means including at least one unidirectional communication means and one bidirectional communication means, a configuration may be employed where the divided encrypted content is transmitted using a plurality of communication means and further, the encryption key is transmitted via one of the plurality of communication means. In the example described above, the communication means include one broadcast wave and one mobile network (or internet network). However, it is not limited to such a configuration. A configuration having other communication means may be employed, wherein the encrypted content and the encryption key are transmitted using three communication means or four communication means. Also in the case of such a configuration, by dividing the transmission path of the key, the content, and the two parts of the divided encrypted content, including at the time of retransmission, the content cannot be restored even if all of the communications of one of the paths is intercepted. Therefore, confidentiality of the data can be improved.

Furthermore, in the example described above, an example was presented where the content is divided into two, and then encrypted using a single encryption key. As another example, the encryption unit 11 may generate the encrypted content A by encrypting the content A using an encryption key "a", and further, generate the encrypted content B by encrypting the content B using an encryption key "b". In this case, for example, the first transmission unit 12 transmits the encrypted content A, and the second transmission unit 13 transmits the encrypted content B. Furthermore, the first transmission unit 12 transmits the encryption key "b", and the second transmission unit 13 transmits the encryption key "a". Moreover, for example, if decryption using the encryption key "a" fails, the communication terminal device 20 transmits a retransmission request signal for the encryption key "a" to the mobile network data management device 103 using the mobile network. In addition, the content management device 101, on the basis that the retransmission request is for the encryption key "a", instructs the mobile network data management device 103, which transmitted the encryption key "a" the previous time, to retransmit the encryption key "a". The mobile network data management device 103 retransmits the encryption key "a". Furthermore, when the communication terminal device 20 requests retransmission of the encrypted content A, it transmits a retransmission request signal for the encrypted content A to the mobile network data management device 103 using the mobile network. Then, the content management device 101, on the basis that the retransmission request is for the encrypted content A, instructs the broadcast data management device 102, which transmitted the encrypted content A the previous time, to retransmit the encrypted content A. The broadcast data management device 102 retransmits the encrypted content A. Even in such a configuration, the confidentiality of the content is maintained, and the integrity can be confirmed.

Furthermore, in the example described above, an example was described where encryption is performed after the content is divided. According to the present exemplary embodiment, even if the encrypted content is divided after encryption, transmission and retransmission of the divided encrypted content can be performed by the same processing as described in FIG. 6A and FIG. 6B. However, if the encrypted content is divided after encryption, the merging decryption unit 23 first performs processing that merges the encrypted content A and the encrypted content B during integrity confirmation processing in step Sc4 of FIG. 6A and step Sd4 of FIG. 6B. Then, the merging decryption unit 23 decrypts the merged encrypted content using the received encryption key and confirms the integrity of the data.

### <Second Exemplary Embodiment>

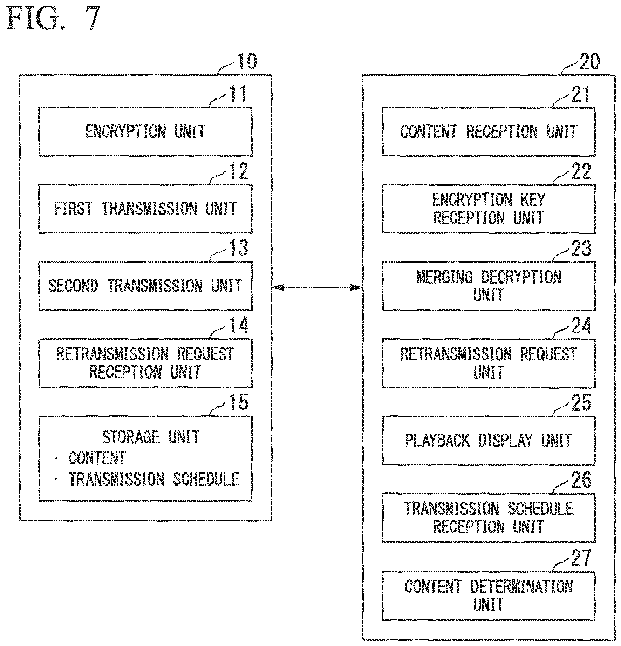

Hereunder, a power supply system according to a second exemplary embodiment of the present invention will be described with reference to FIG. 7 to FIG. 9.

In the second exemplary embodiment, the transmission system 10 transmits a content transmission schedule prior to transmission of encrypted content and an encryption key. If the communication terminal device 20 is unable to receive the content even when the scheduled time indicated by the transmission schedule arrives, it makes a transmission request and the like. Alternatively, when the content expected to be received as indicated by the transmission schedule and the actually received content are compared, and the two do not match each other, a retransmission request and the like is made.

FIG. 7 is a block diagram showing an example of a transmission/reception system according to the second exemplary embodiment of the present invention.

In terms of the configuration of the second exemplary embodiment, the same components as those of the first exemplary embodiment are denoted by the same reference numerals, and detailed descriptions thereof will be omitted. As illustrated, the transmission system 10 includes an encryption unit 11, a first transmission unit 12, a second transmission unit 13, a retransmission request reception unit 14, and a storage unit 15.

In the present exemplary embodiment, the storage unit 15 stores a transmission schedule in addition to content. The transmission schedule stores, for example, the identification information for one day of content scheduled for transmission, and a scheduled transmission start time and a scheduled transmission end time of the content. Alternatively, the transmission schedule stores identification information of the content to be transmitted next (immediately after transmission of the transmission schedule).

As illustrated, the communication terminal device 20 includes; a content reception unit 21, an encryption key reception unit 22, a merging decryption unit 23, a retransmission request unit 24, a playback display unit 25, a transmission schedule reception unit 26, and a content determination unit 27.

The transmission schedule reception unit 26 receives a transmission schedule.

The content determination unit 27 determines whether appropriate content which is expected to be received has been received based on the transmission schedule received by the transmission schedule reception unit 26.

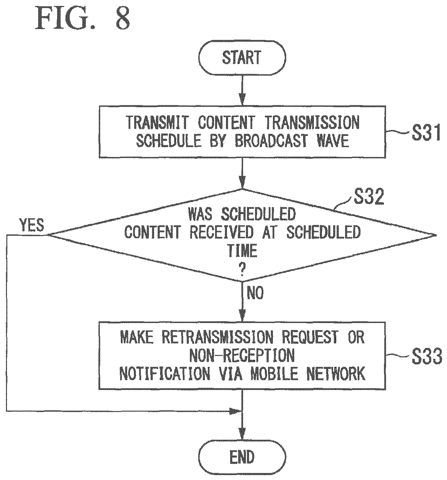

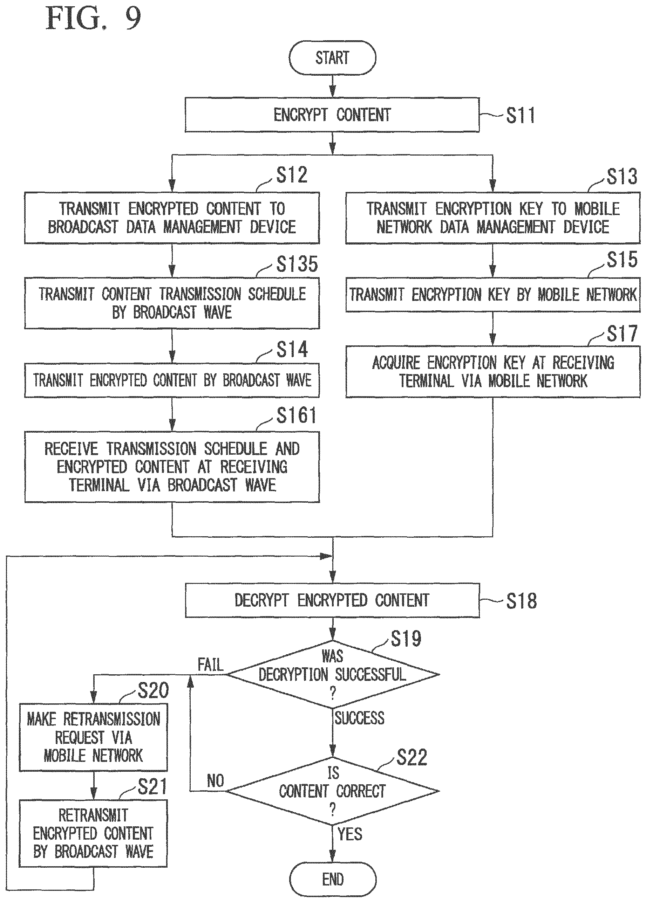

The other components are the same as those of the first exemplary embodiment. Next, a processing sequence for transmission/reception of content according to the present exemplary embodiment will be described with reference to FIG. 8 and FIG. 9.

First, an example will be described in which a content transmission schedule for a predetermined period is transmitted in advance, and it is determined whether the content can be received at the scheduled time.

FIG. 8 is a first flowchart showing an example of data transmission/reception processing according to the second exemplary embodiment of the present invention.

First, the first transmission unit 12 of the broadcast data management device 102 transmits by a broadcast wave, the content transmission schedule for a predetermined period (for example, one day) stored by the storage unit 15 (step S31). Then, in the communication terminal device 20, the transmission schedule reception unit 26 receives the transmission schedule. The transmission schedule lists the scheduled transmission time for each content. The content determination unit 27 determines whether the content has been received by the content reception unit 21 at the scheduled transmission time listed in the transmission schedule (step S32). For example, content identification information is assigned to the encrypted content, and the content determination unit 27 monitors whether the encrypted content assigned the content identifying information, and which is listed in the transmission schedule, has been received by the content reception unit 21 at the scheduled transmission time (or within a predetermined period based on the scheduled transmission time). If the content reception unit 21 receives the encrypted content (step S32: Yes), the present flowchart ends. If the scheduled encrypted content is not received (step S32: No), the content determination unit 27 outputs the determination result to the retransmission request unit 24. Next, the retransmission request unit 24 transmits the identification information of the content expected to be received via the mobile network and the like, and transmits an appropriate content retransmission request signal to the mobile network data management device 103 via the mobile network (or internet network) (step S33). Alternatively, the retransmission request unit 24 transmits a non-reception notification signal indicating that the content has not been received, to the mobile network data management device 103 via the mobile network.

The transmission schedule may be transmitted by the second transmission unit 13 of the mobile network data management device 103 via the mobile network (or internet network). Furthermore, the delivery of each of the encrypted content and the encryption key by a different communication means (communication path), when being transmitted for the first time and when being retransmitted, is the same as in the first exemplary embodiment.

For example, in cases such as those where the communication terminal device 20 is moving, it is possible that no content can be received at all depending on the signal environment. In such cases, it is possible that the communication terminal device 20 will not even recognize the existence of the content being transmitted. According to the present exemplary embodiment, by receiving a transmission schedule (transmission schedule information) in advance, it is possible to determine the existence of encrypted content that should be transmitted at each point in time. Furthermore, when the content expected to be received cannot be received, it is possible to prevent omissions in the received content by making retransmission requests. For example, when the encrypted content is transmitted the first time by a broadcast wave and the encryption key is transmitted via the mobile network, and a retransmission request is received from communication terminal device 20, considering that the communication was not successful the first time, the encrypted content may be retransmitted this time via the mobile network, and the encryption key may be retransmitted by a broadcast wave.

Next, an example will be described where a transmission schedule is transmitted immediately before (or simultaneously with) transmission of encrypted content, and it is determined whether the appropriate content was transmitted.

FIG. 9 is a second flowchart showing an example of data transmission/reception processing according to the second exemplary embodiment of the present invention.

First, the encryption unit 11 encrypts plain text content by an authenticated encryption technique (step S11). Then, the content management device 101 transmits the encrypted content and a transmission schedule listing the content thereof, to the broadcast data management device 102 (step S12). Next, in the broadcast data management device 102, the first transmission unit 12 transmits the transmission schedule by a broadcast wave (step S135). Then, the first transmission unit 12 transmits the encrypted content by a broadcast wave (step S14). Next, in the communication terminal device 20, the transmission schedule reception unit 26 receives the transmission schedule transmitted by the broadcast wave. Furthermore, the content reception unit 21 receives the encrypted content transmitted by the broadcast wave (step S161).

Concurrently with the processing of step S12, step S135, step S14, and step S16, the content management device 101 transmits the encryption key to the mobile network data management device 103 (step S13). Then, in the mobile network data management device 103, the second transmission unit 13 transmits the encryption key via the mobile network (step S15). Next, in the communication terminal device 20, the encryption key reception unit 22 receives the encryption key transmitted using a communication network (step S17).

Then, the merging decryption unit 23 decrypts the encrypted content (step S18). If the decryption failed (step S19: fail), the retransmission request unit 24 transmits a retransmission request signal for the encrypted content and the like via the mobile network (step S20). Furthermore, in the transmission system 10, retransmission of the encrypted content by the broadcast data management device 102 by a broadcast wave (step S21) is the same as in the first exemplary embodiment.

In the present exemplary embodiment, if the decryption was successful (step S19: success), it is determined whether the content received by the content determination unit 27 is appropriate (step S22). For example, the content determination unit 27 compares the content identification information included in the decrypted content and the identification information listed in the transmission schedule, and determines that the content is correct if the two match each other. Furthermore, if the two do not match each other, the content determination unit 27 determines that the content has an error. If the content is correct (step S22: Yes), the present processing flow ends. In this case, the user of the communication terminal device 20 is able to view and browse the decrypted content using the playback display unit 25.

If the content has an error (step S22: No), the processing is repeated from step S20. In other words, the retransmission request unit 24 transmits a retransmission request signal for the encrypted content via the mobile network, and the broadcast data management device 102 retransmits by a broadcast wave the encrypted content, which is content among the content listed in the transmission schedule that corresponds to the current time and has been encrypted (step S22). The processing from step S20 is repeated until the decryption is successful, and content reception is completed when the decryption is finally successful.

The transmission schedule may be transmitted by the second transmission unit 13 via the mobile network (or internet network). Furthermore, the determination in step S22 of whether the content matches the content listed in the transmission schedule can be made before decryption (step S18) by allowing the identification information of the content to be confirmed without decryption. Moreover, the transmission schedule may be encrypted by an authenticated encryption technique.

According to the present exemplary embodiment, in addition to the effects from the first exemplary embodiment that improve the confidentiality and integrity of the content, it is possible to determine whether the received content is appropriate.

The transmission system 10 (content management device 101, broadcast data management device 102, and mobile network data management device 103) and the communication terminal device 20 described above have an internal computer. The processing sequences of the transmission system 10 and the communication terminal device 20 described above are stored in a program format in a computer-readable recording medium, and the processing above is performed by a computer reading and executing the program. Here, the computer-readable recording medium refers to a magnetic disk, a magnetic optical disk, a CD-ROM, a DVD-ROM, a semiconductor memory, and the like. Furthermore, the computer program may be transmitted to a computer by a communication line, and the computer receiving the transmission may execute the program. Moreover, the program described above may be one for realizing a portion of the functions mentioned above. In addition, the program described above may be one that realizes the functions mentioned above by being combined with a program already recorded on the computer system, as a so-called difference file (difference program). Furthermore, some or all of the functions of the transmission system 10 and the communication terminal device 20 described above may be realized using hardware such as an ASIC (Application Specific Integrated Circuit), a PLD (Programmable Logic Device), an FPGA (Field-Programmable Gate Array), or a PLC (Programmable Logic Controller).

In addition, the constituent elements in the exemplary embodiments described above may be substituted as appropriate with known constituent elements within a scope not departing from the spirit of the present invention. Moreover, the technical scope of the present invention is not limited to the exemplary embodiments described above, and various changes may be applied within a scope not departing from the spirit of the present invention. The description of the exemplary embodiments used an example in which the broadcast data management device 102 is provided with the first transmission unit 12, and the mobile network data management device is provided with the second transmission unit 13. However, the exemplary embodiments are not limited to such a configuration. The broadcast data management device 102 may include the second transmission unit 13, and the mobile network data management device may include the first transmission unit 12. The description of the exemplary embodiments described a case where a mobile network is used as an example of a bidirectional communication means. However, an internet network can be used instead of a mobile network.

Priority is claimed on Japanese Patent Application No. 2017-059616, filed March 24, 2017, the disclosure of which is incorporated herein in its entirety.

### INDUSTRIAL APPLICABILITY

The present invention may be applied to a transmission system, a communication terminal device, and a transmission method.

### Reference Symbols

- 10: Transmission system
- 11: Encryption unit
- 12: First transmission unit
- 13: Second transmission unit
- 14: Retransmission request reception unit
- 15: Storage unit
- 101: Content management device
- 102: Broadcast data management device
- 103: Mobile network data management device
- 20: Communication terminal device
- 21: Content reception unit
- 22: Encryption key reception unit
- 23: Merging decryption unit
- 24: Retransmission request unit
- 25: Playback display unit

## Claims

1. A transmission system that transmits content using a bidirectional communication means and a unidirectional communication means, the transmission system comprising:
an encryption unit that encrypts the content;
a first transmission unit that transmits the encrypted content or an encryption key used in the encryption, using the unidirectional communication means; and
a second transmission unit that transmits, among the encrypted content and the encryption key used in the encryption, data other than the data transmitted by the first transmission unit, using the bidirectional communication means,
wherein the first transmission unit retransmits, using the unidirectional communication means, the data transmitted the previous time, in response to a retransmission request via the bidirectional communication means.

2. The transmission system according to claim 1, wherein the encryption unit uses an authenticated encryption technique for the encryption of the content.

3. The transmission system according to claim 1 or 2,
wherein the first transmission unit transmits the encrypted content using the unidirectional communication means, and
the second transmission unit transmits the encryption key using the bidirectional communication means.

4. The transmission system according to claim 1 or 2,
wherein the first transmission unit transmits the encryption key using the unidirectional communication means, and
the second transmission unit transmits the encrypted content using the bidirectional communication means.

5. The transmission system according to any one of claims 1 to 4, wherein the encryption unit encrypts the content using a different encryption key to the previous time, in response to the retransmission request.

6. A transmission system that transmits content using a bidirectional communication means and a unidirectional communication means, the transmission system comprising:
a first transmission unit that transmits one divided part of the content using the unidirectional communication means; and
a second transmission unit that transmits the other divided part of the content using the bidirectional communication means,
wherein the first transmission unit retransmits, using the unidirectional communication means, the data transmitted the previous time, in response to a retransmission request via the bidirectional communication means.

7. The transmission system according to any one of claims 1 to 6, wherein the first transmission unit or the second transmission unit further transmits transmission schedule information of the content.

8. A communication terminal device that
receives the encrypted content and the encryption key from the transmission system according to any one of claims 1 to 5, and
makes a retransmission request using the bidirectional communication means when decryption of the content fails using the encryption key.

9. A transmission method performed by a transmission system that transmits content using a bidirectional communication means and a unidirectional communication means, the transmission method comprising:
encrypting the content;
transmitting the encrypted content or an encryption key used in the encryption, using the unidirectional communication means;
transmitting, among the encrypted content and the encryption key used in the encryption, data other than the data transmitted using the unidirectional communication means, using the bidirectional communication means; and
retransmitting, using the unidirectional communication means, the data transmitted the previous time, in response to a retransmission request via the bidirectional communication means.

10. A transmission method performed by a transmission system that transmits content using a bidirectional communication means and a unidirectional communication means, the transmission method comprising:
transmitting one divided part of the content using the unidirectional communication means;
transmitting the other divided part of the content using the bidirectional communication means; and
retransmitting, using the unidirectional communication means, the data transmitted the previous time, in response to a retransmission request via the bidirectional communication means.
